# EUROPEAN PATENT SPECIFICATION

(11) **EP 3 185 431 B1**
(45) Date of publication and mention of the grant of the patent: **22.09.2021**
(21) Application number: 15307115.4
(22) Date of filing: 22.12.2015
(51) Int. Cl.: H04B 5/00, G06K 7/10

(54) **POLLING FOR NEAR FIELD COMMUNICATION**
ABFRAGE FÜR NAHFELDKOMMUNIKATION
SONDAGE POUR UNE COMMUNICATION EN CHAMP PROCHE

(43) Date of publication of application: 28.06.2017
(73) Proprietor: Intel Corporation, Santa Clara, CA 95054 (US)
(72) Inventor: Michel, Jean-Yves, 06220 Vallauris (FR); Safajoo, Nerci, 06600 Antibes (FR)
(74) Representative: 2SPL Patentanwälte PartG mbB

(56) References cited:
- US-A1- 2007 236 336
- US-A1- 2012 329 391
- US-A1- 2013 169 338
- US-A1- 2014 370 803

## Description

### Field

The present disclosure generally relates to wireless communications and, more particularly, to methods and apparatuses for Near Field Communication (NFC).

### Background

Near Field Communication (NFC) refers to a wireless communication based on (electro-) magnetic coupling between antennas separated by a short distance, usually less than 10 cm. The magnetic field may be generated by a battery-powered NFC reader/writer communicating with a passive NFC device that draws its power from the magnetic field. NFC operates within the globally available unlicensed Radio Frequency (RF) Industrial, Scientific and Medical (ISM) band of 13.56 MHz on ISO/IEC 14443 air interface and at data rates ranging from 106 kbit/s to 424 kbit/s. ISO/IEC 18000-3 refers to an international standard for passive Radio Frequency Identification (RFID) item level identification and describes the parameters for air interface communications at a carrier frequency of 13.56 MHz.

Prior to initiating an NFC communication, an NFC reader/writer device needs to detect if another NFC device is within short distance. This process may also be referred to as polling. Conventional polling mechanisms are described in US 2007/0236336 A1, US 2012/0329391 A1, or US 2014/0370803 A1. Some conventional polling mechanisms include transmitting short burst of the 13.56 MHz RF carrier signal and detecting a change of impedance seen by an antenna of the NFC reader/writer device. This requires an accurate clock source to generate the RF carrier signal. In battery operated equipment like a smart phone for instance, when an NFC radio is enabled, the card detect or polling mode described above could be permanently enabled, polling several times per second to see if an NFC device is present even if the phone is in sleep mode or turned off. Therefore, the average current consumed by this polling action can become significant for the equipment battery discharging time.

US 2013/0169338 A1 is related to a clock switching architecture for cellular phones or other electronic devices and describes to select differently power-consuming oscillators for providing a clock signal for the real-time clock based on a power supply status of the electronic device.

There is a demand for reducing power consumption when polling for NFC transponders.

This demand is met by apparatuses and methods in accordance with the independent claims.

### Brief description of the Drawings

Some examples of apparatuses and/or methods will be described in the following by way of example only, and with reference to the accompanying drawings, in which
- Fig. 1a-c: schematically illustrate an NFC reader device and an NFC transponder;
- Fig. 2: shows a block diagram of an NFC reader device according to an example of the present disclosure;
- Fig. 3: shows example impulse responses of an NFC device in response to a signal pulse;
- Fig. 4: shows a block diagram of an NFC reader device according to a further example of the present disclosure;
- Fig. 5: shows a flowchart of a polling method according to an example of the present disclosure;
- Figs. 6a,b: show flowcharts of polling methods according to further examples of the present disclosure; and
- Fig. 7: shows a block diagram of an embodiment of a device with NFC capabilities.

### Description of Embodiments

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some examples thereof are shown by way of example in the figures and will herein be described in detail. It should be understood, however, that there is no intent to limit examples to the particular forms disclosed, but on the contrary, examples are to cover all modifications, and alternatives without departing from the scope of the appended claims. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular examples only and is not intended to be limiting of further examples. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art, unless expressly defined otherwise herein.

Portions of examples and corresponding detailed description are presented in terms of software, or algorithms and symbolic representations of operation of data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative examples will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), Digital Signal Processors (DSPs), Application- Specific Integrated Circuits, Field Programmable Gate Arrays (FPGAs), computers, or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Furthermore, examples may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

Examples of the present disclosure refer to NFC. The person having benefit from the present disclosure will appreciate that the concept of NFC may also include contactless communication systems such as RFID, for example. Hence, an NFC device may also be regarded as an RFID device in some examples.

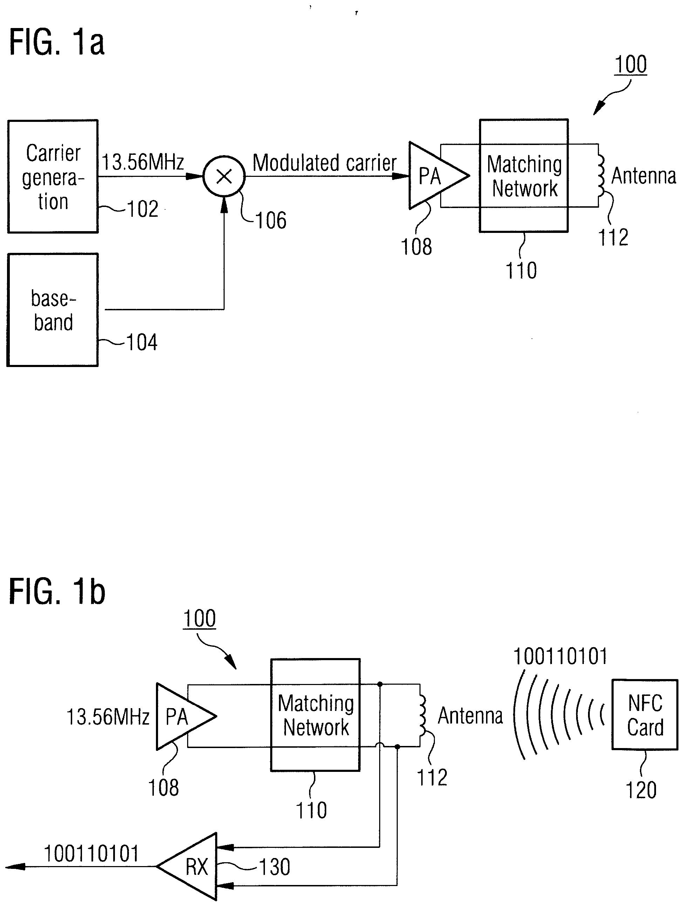

To ease understanding of the principles set forth in the present disclosure, **Fig. 1a** shows an example of a transmit (TX) branch of a conventional NFC reader/writer device 100. NFC reader/writer devices will also be referred to herein as NFC readers, based on their capability to read information from passive or active NFC transponders, such as passive NFC cards, for example.

In the illustrated example, NFC reader 100 includes carrier generation circuitry 102, digital baseband processing circuitry 104, a mixer device 106, a power amplifier (PA) 108, an impedance matching network 110, and a loop antenna 112.

Carrier generation circuitry 102 is configured to generate an oscillating RF carrier signal. In case of NFC, the carrier signal may have a carrier frequency of 13.56 MHz. Carrier generation circuitry 102 may comprise digital or analog oscillator circuitry making use of one or more crystal oscillators for high frequency stability in the order of ±50 ppm (parts per million) or less. For example, it may include a digital frequency synthesizer. Optionally, one or more Phase Locked Loops (PLLs) may be comprised in carrier generation circuitry 102. Carrier generation circuitry 102 may generate the RF carrier frequency as well as a clock source for digital baseband processing circuitry 104.

Digital processing circuitry 104 may generate digital baseband signals, such as a digital bit stream representing useful data, for coding or modulating the RF carrier signal. For example, digital processing circuitry 104 may be included in a microcontroller or the like. NFC may employ two different coding schemes to transfer data. If an active NFC device transfers data at 106 kbit/s, 212 kbit/s, 424 kbit/s or 848 kbit/s, a modified Miller coding (also known as delay encoding) with 100% modulation may be used. In all other cases Manchester coding (also known as phase coding) may be used with a modulation ratio of 10%. Optionally, digital processing circuitry 104 may provide for cryptographic protocols.

Mixer 106 may combine the RF carrier signal from carrier generation circuitry 102 and the baseband signal from digital processing circuitry 104 to generate an information bearing modulated carrier signal. Note that mixing can take place in the digital or analog domain in alternative examples. The skilled person having benefit from the present disclosure will appreciate that Digital-to-Analog Converters (DACs) may be provided for converting a digital signal into a corresponding analog signal.

The modulated carrier signal from mixer 106 is input to PA 108, amplified and output from PA 108 to antenna network 110, 112. PA 108 can drive the modulated carrier into low impedance loads (e.g. an antenna network) and may comprise one or more active components, such as transistors, as well as one or more passive components, such as resistors, capacitors, or inductors. Typically, PA 108 will be supplied by a supply voltage (for example, 5V). Depending on the implementation of PA 108, the modulated carrier signal may be a voltage or a current. Likewise, an amplified output signal of PA 108 may be a voltage or a current.

Matching network 110 may comprise passive components, such as resistors, capacitors, and inductors, to match an output impedance of PA 108 to an input impedance of loop antenna 112 in order to maximize power transfer or minimize signal reflection from loop antenna 112. Matching network 110 and loop antenna 112 will also be referred to herein as antenna network.

As can be seen from **Fig. 1b****,** the modulated or unmodulated carrier signal emitted via loop antenna 112 may be used to energize a (passive) NFC transponder 120 in close proximity to the (active) NFC reader 100. While an active NFC device comprises an own power source, such as a battery, for example, a passive NFC device does not have an own power source. Instead it is powered via the electromagnetic field generated by NFC reader device 100.

Due to the coupling of the loop antennas of NFC reader 100 and NFC transponder 120, the passive NFC transponder 120 also affects the active NFC reader 100. Controlled variation in the impedance of the NFC transponder 120 causes amplitude or phase changes to the antenna voltage or current of the NFC reader 100, detected by receiver (RX) detection circuitry 130 of NFC reader 100. This technique is called load modulation and may be used to convey information from NFC transponder 120 to NFC reader 100. Thereby RX detection circuitry can sense the antenna network voltage or current amplitude and convert it back into a digital bit stream representing the communication receive data.

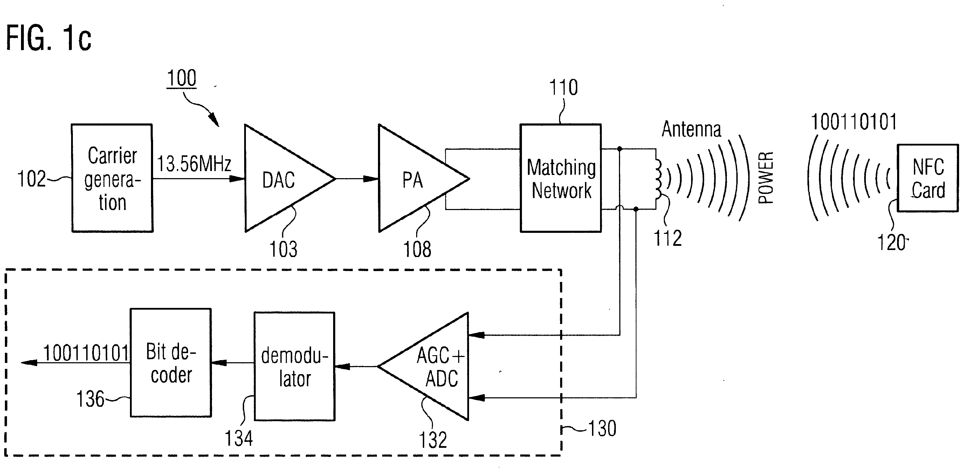

Turning now to **Fig. 1c**, it is shown a system comprising NFC reader 100 and passive NFC transponder 120.

In the setup of Fig. 1c, the TX branch of NFC reader 100 is used to poll for the presence or absence NFC transponder 120. Digital processing circuitry 104 is omitted in the schematic depiction of Fig. 1c. Carrier generation circuitry 102 may synthesize a digital carrier signal having a carrier frequency of 13.56 MHz, for example. For that purpose carrier generation circuitry 102 may include a Direct Digital Synthesizer (DDS), for example. A DDS is a type of frequency synthesizer used for creating arbitrary waveforms from a single, fixed-frequency reference clock. As mentioned before, this reference clock may be provided via one or more crystal oscillators. The digital carrier signal may then be digital-to-analog converted via DAC 103 before it is amplified and sent to antenna network 110, 112.

When NFC transponder 120 is moving within the magnetic field created by a 13.56MHz current in NFC antenna 112, the impedance seen by the PA 108 driving the antenna 112 plus the resonant network 110 is changing from a low value (for example < 5 Ohms) when no card is present to a much larger value when a card is very close to the reader antenna (for example 80 Ohms). The impedance changes can be detected by RX detection circuitry 130. In the example of Fig. 1c, RX detection circuitry 130 may comprise an Automatic Gain Controller (AGC) including a closed-loop regulating circuit to provide a controlled signal amplitude at its output, despite variation of the amplitude in the input signal at the antenna terminals. The average or peak output signal level is used to dynamically adjust the input-to-output gain to a suitable value, enabling the circuit to work satisfactorily with a greater range of input signal level. Further, RX detection circuitry 130 may comprise Analog-to-Digital Converter (ADC) to convert the analog RX signal to the digital domain. The digital RX signal may then be demodulated using a demodulator 134 and may further be decoded via decoder 136.

In conventional implementations, the TX synthesizer may be built around a DAC driven by a digital circuit synthesizing the carrier signal in the digital domain. Likely, the receiver may be built around a high-speed ADC, converting the receive RF signal into a digital data stream from which the amplitude information is extracted using Digital Signal Processing (DSP) techniques.

Conventional polling for the presence or absence of NFC transponder 120 may comprise transmitting at least one burst of the oscillating 13.56MHz carrier signal and detecting the change of impedance "seen" by PA 108. In signal communications, a burst may be understood as a limited number of oscillations with fixed frequency. NFC transponder detection may be done by detecting, between two consecutive bursts of the carrier signal, a change in output voltage amplitude when the PA 108 is driving in current or a change in output current amplitude when driving in voltage. In this case, one of the significant contributors of the power consumption is the stable system clock reference that needs to be woken up at each burst in order to get the accurate 13.56MHz carrier frequency +/- 50 ppm as required by the standards.

The present disclosure proposes example implementations to reduce power consumption during NFC transponder detection (polling).

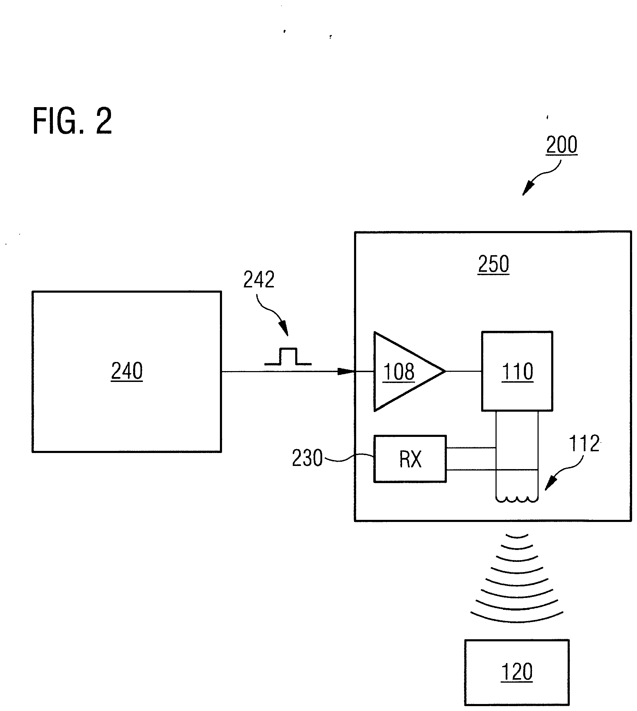

**Fig. 2** shows a schematic and high-level block diagram of an NFC reader device 200 according to an example of the present disclosure.

NFC reader device 200 comprises a pulse generator 240 configured to generate a signal pulse 242. A signal pulse may be understood as a rapid, transient change in the amplitude of an analog or digital signal from a baseline value to a higher or lower value, followed by a rapid return to the baseline value. The signal pulse 242 is different from the RF carrier signal. NFC reader device 200 further comprises transceiver circuitry 250 configured to detect or poll for a presence of an NFC transponder 120 using the signal pulse.

The setup of Fig. 2 may be used in a polling or detect mode of NFC reader device 200 using the signal pulse to poll for the presence of NFC transponder 120. NFC reader device 200 may also be operable in a data communication mode using the RF carrier signal in the aforementioned manner to communicate between the NFC reader device 200 and a detected NFC transponder 120.

Thus, NFC reader device 200 differs from NFC reader device 100 in that it uses a short signal pulse for NFC transponder detection instead of using a relatively long burst of the NFC RF carrier signal. In some examples, the signal pulse 242 may be a pulse having a non-sinusoidal pulse shape, such as a rectangular, raised cosine, sinc, or Gaussian pulse shape, for example. That is to say, the pulse generator 240 may be configured to generate the signal pulse 242 having a non-oscillating or non-sinusoidal signal shape with a rapid, transient change in the amplitude of an analog or digital signal from a baseline value to a higher or lower value, followed by a rapid return to the baseline value.

As has been explained with reference to Figs 1a-c, transceiver circuitry 250 may further comprise an antenna network 110, 112. NFC reader device 200 may be configured to feed the signal pulse 242 to the antenna network 110, 112, for example via a voltage or current driven PA 108. The presence or absence of the NFC transponder 120 may be detected based on an antenna response signal detected in response to the signal pulse. Thus, the antenna response signal may be regarded as an impulse response of the NFC reader device 200 and possibly NFC transponder 120 to signal pulse 242.

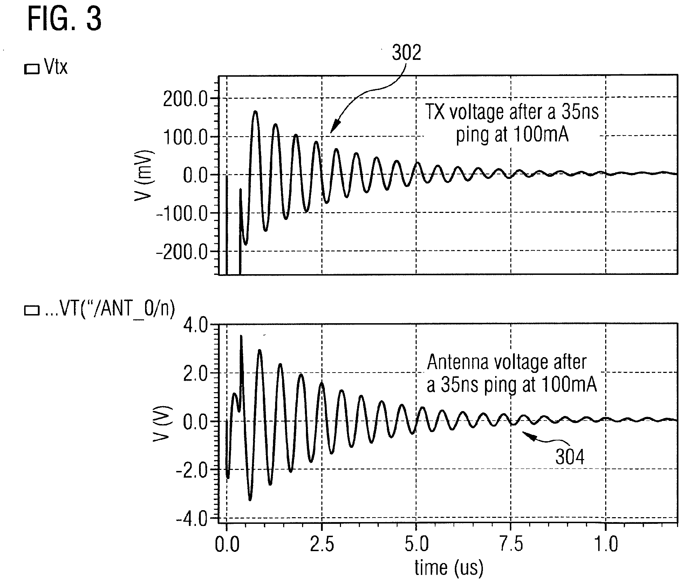

**Fig. 3** illustrates different responses to a signal pulse. In the illustrated example, a rectangular current pulse (ping) of 35 ns duration and an amplitude of 100 mA was generated. Curve 302 shows the resulting voltage signal on the PA output, while curve 304 shows the resulting voltage signal on the antenna terminals (in absence of NFC transponder 120). As explained before, the antenna response signal may be regarded as impulse response of the NFC reader device 200.

The skilled person having benefit from the present disclosure will appreciate that the decay of antenna response signal 304 depends on the impedance characteristic of the antenna resonator. The real part of the impedance will "de-Q" the resonator, therefore reducing the ringing amplitude and length. The imaginary part of the impedance will shift the resonance frequency and the phase of the ringing.

In example implementations, the pulse duration should be sufficient to transfer enough electromagnetic energy to the loop antenna 112 sufficient to energize a potentially present NFC transponder 120. Thus, pulse durations may be in a range from 1/8 of the resonance period to twice the resonance period, for example. More particularly, pulse durations may be in a range from 1/6 of the resonance period to ½ of the resonance period. The resonance period is 1/*f_{c}*, with *f_{c}* denoting the RF carrier frequency (e.g. 13.56 MHz) of the carrier signal used in the NFC system. The skilled person having benefit from the present disclosure will appreciate that the antenna network may not always be tuned to resonate at exactly 13.56MHz. Component variation and sometimes system optimization may lead to resonance frequencies somewhat above or below 13.56MHz. It has been found that the pulse duration may be about ¼ of the resonance period but does not require to be accurate. The sensitivity of the card detector may still be acceptable even if the pulse is ½ of the resonance period. Therefore no accurate clock reference is needed for the polling or detect mode, leading to power savings over the examples of Fig. 1.

The NFC transponder detection may be implemented using RX detection circuitry 230 as part of transceiver circuitry 250. In some examples, transceiver circuitry 250 (or RX detection circuitry 230) may be configured to detect the presence or absence of NFC transponder 120 based on a comparison between the antenna response signal and a reference signal. More details on this will be explained further below.

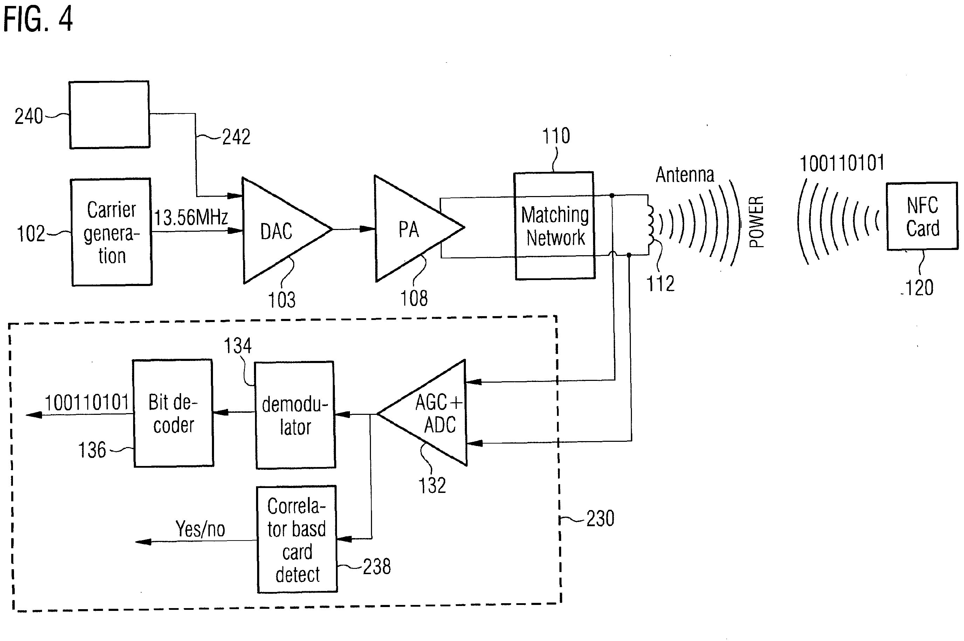

Another example of an NFC reader device 200 according to the present invention is illustrated in **Fig. 4****.** For ease of understanding, digital processing circuitry 104 is omitted in the schematic depiction of Fig. 4. NFC reader device 200 differs from the example of Fig. 1c in that additional signal processing blocks 240 and 238 are implemented. In the setup of Fig. 4, NFC reader 200 is configured for two different modes of operation: a first mode for polling and a second mode for data communication.

In polling or detection mode, pulse generator 240 may synthesize a digital signal pulse having a duration from 1/8 of the resonance period 1/*f_{c}* to twice the resonance period 1/*f_{c}.* The signal pulse shape may be rectangular, for example. The signal pulse is derived from a clock signal having lower frequency accuracy than the frequency accuracy of the clock signal used for generating the RF carrier signal. For that purpose pulse generator 240 includes oscillator circuitry comprising one or more ceramic oscillators, one or more ring oscillators, or one or more RC oscillators. A ring oscillator is a device which may be composed of an odd number of NOT gates whose output oscillates between two voltage levels. The NOT gates, or inverters, may be attached in a chain and the output of the last inverter is fed back into the first. RC oscillators are a type of feedback oscillator. They may comprise an amplifying device (e.g. a transistor or an op-amp) with some of its output energy fed back into its input through a network of resistors and capacitors, an RC network, to achieve positive feedback, causing it to generate an oscillating sinusoidal voltage. The digital signal pulse 242 may then be digital-to-analog converted via DAC 103 before it is amplified and fed to antenna network 110, 112. In some implementations, pulse generator 240 may be configured to repeatedly generate a signal pulse 242 with a pulse repetition frequency in a range between 0.5 Hz and 20 Hz, in particular between 1 Hz and 5 Hz. For example, a short signal pulse may be generated once every 200 ms, once every 300 ms, once every 400 ms, etc.

In data communication mode, carrier generation circuitry 102 may synthesize the digital carrier signal having a carrier frequency of 13.56 MHz, for example. For this purpose, carrier generation circuitry 102 includes oscillator circuitry configured to generate the carrier signal with a frequency accuracy higher than that for generating the signal pulse 242. As mentioned before, the carrier signal is provided via one or more crystal oscillators. The digital carrier signal may then be digital-to-analog converted via DAC 103 before it is amplified and sent to antenna network 110, 112.

During polling or detection mode, the presence or absence of NFC transponder 120 may be detected based on a comparison between the antenna response signal and a previously generated reference signal. In the example of Fig. 4, RX circuitry 230 may comprise an AGC and ADC portion to convert a gain controlled antenna response signal to the digital domain. In polling or detection mode, detection circuitry 238 coupled to the output of AGC/ADC block 132 may be configured to detect the presence or absence of the NFC transponder 120 based on a comparison or correlation between the digital antenna response signal and a digital reference signal. In some examples, the reference signal may be based on at least one previous impulse response of the NFC device 200 responsive to at least one previously generated signal pulse 242. Thus, in one implementation, the data out of the AGC/ADC block 132 may be processed by a digital auto-correlator. The result of the auto-correlation may be compared to the one from a previous pulse response. If the difference is significant, detection circuitry 238 can signal a detection to an NFC core processor. In another example implementation, a first A/D converter capture may be stored in an NFC controller memory after a first pulse response and successive A/D captures may be passed into a correlator with the first capture. When the correlation result goes below a predetermined level, the card detect circuit can signal a detection to the NFC core processor.

During data communication mode, a digital RX signal may be demodulated using a demodulator 134 and further be decoded via decoder 136.

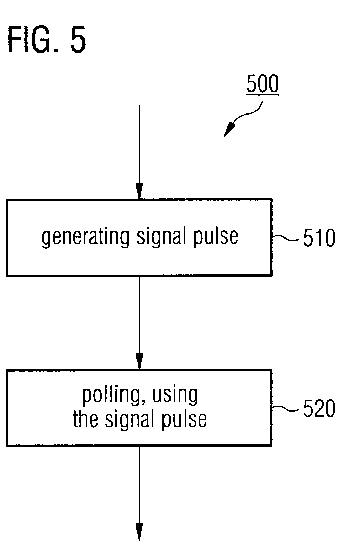

NFC reader device 200 can be used for implementing an NFC polling method. An example flowchart of a polling method 500 is shown in **Fig. 5****.**

Method 500 includes generating a signal pulse, see act 510. Further, method 500 includes polling for a presence of an NFC transponder using the signal pulse, see act 520. The signal pulse may be generated independently of an RF carrier signal used for communication between the NFC reader device 200 and the NFC transponder 120. Also, the signal pulse may be used for polling instead of the carrier signal used.

As has been explained before, generating the signal pulse 242 may comprise generating a first clock signal having a different frequency (e.g. 1 - 5 Hz) than a second clock signal used for generating the carrier signal (e.g. 13.56 MHz). The first clock signal may also be generated with a lower frequency accuracy than the second clock signal.

The polling act 520 may comprise feeding the signal pulse to an antenna network of the NFC device and detecting the presence or absence of the NFC transponder based on an antenna signal detected in response to the signal pulse. Thereby the presence or absence of the NFC transponder may be detected based on a comparison between the antenna signal and a reference signal.

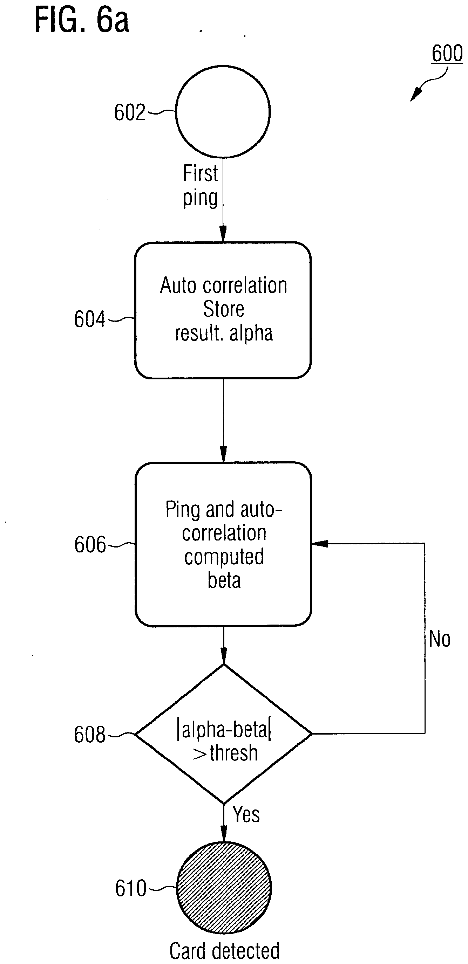

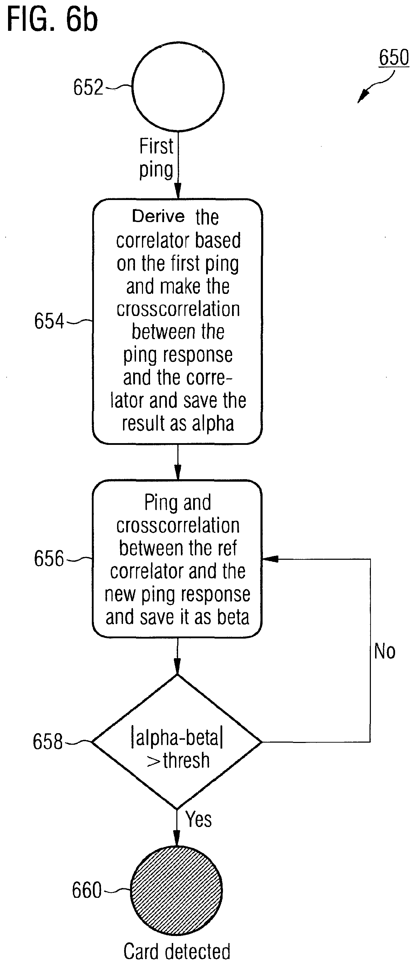

Two more detailed examples of NFC polling methods are described with reference to **Figs. 6a** **and** **6b****.**

Method 600 of Fig. 6a comprises generating and sending a first pulse (or ping), see act 602. A first antenna response signal (impulse response) may be detected in response to the first ping. Let us assume that the first antenna response signal is detected in absence of an NFC transponder 120. A first autocorrelation value (alpha) of the first antenna response signal may be computed and stored as reference signal in a memory of the NFC reader device, see act 604. A second ping may be fed to the antenna of NFC reader device 200 and a second antenna response signal may be detected in response to the second ping, see 606. A second autocorrelation value (beta) of the second antenna response signal may be computed and compared with the reference signal, see 608. If an absolute difference between the second autocorrelation coefficient and the reference signal exceeds a certain predefined threshold, an NFC transponder is detected, see 610. Otherwise, acts 606 and 608 may be repeated.

The skilled person having benefit from the present disclosure will appreciate that numerous other comparisons between antenna response signal and reference signal are possible. One other example method 650, depicted in Fig. 6b, comprises generating and sending a first pulse (or ping), see act 652. A first antenna response signal (impulse response) may be detected in response to the first ping. Let us assume that the first antenna response signal is detected in absence of an NFC transponder 120. An autocorrelation value of the first antenna response signal may be computed. Both the first antenna response signal and the autocorrelation value may be stored as reference signals in a memory of the NFC reader device, see act 654. A second ping may be fed to the antenna of NFC reader device 200 and a second antenna response signal may be detected in response to the second ping, see 656. A cross-correlation value (beta) between the second antenna response signal and the stored first antenna response signal may be computed and compared with the stored reference correlation value (alpha), see 658. If an absolute difference between the cross-correlation value (beta) and the reference correlation value (alpha) exceeds a certain predefined threshold, an NFC transponder is detected, see 660. Otherwise, acts 656 and 658 may be repeated.

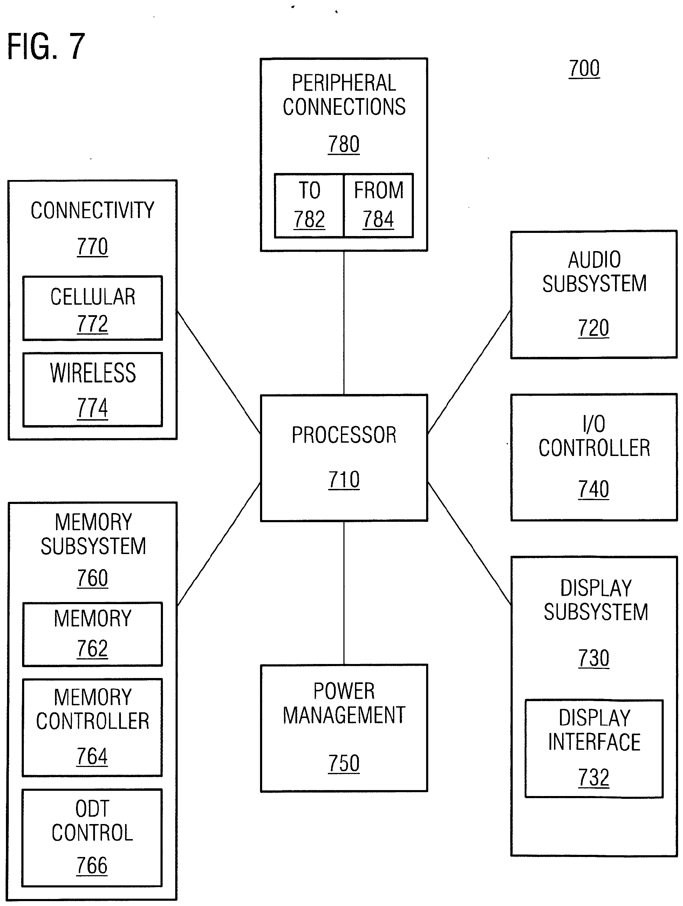

**Fig. 7** is a block diagram of an embodiment of a device, e.g. a mobile device, in which NFC communication according to example implementations can be implemented. Device 700 represents a mobile computing device, such as a computing tablet, a mobile phone or smartphone, a wireless-enabled e-reader, wearable computing device, or other mobile device. It will be understood that certain of the components are shown generally, and not all components of such a device are shown in device 700.

Device 700 includes processor 710, which performs the primary processing operations of device 700. Processor 710 can include one or more physical devices, such as microprocessors, application processors, microcontrollers, programmable logic devices, or other processing means. The processing operations performed by processor 710 include the execution of an operating platform or operating system on which applications and/or device functions are executed. The processing operations include operations related to I/O (input/output) with a human user or with other devices, operations related to power management, and/or operations related to connecting device 700 to another device. The processing operations can also include operations related to audio I/O and/or display I/O.

In one embodiment, device 700 includes audio subsystem 720, which represents hardware (e.g., audio hardware and audio circuits) and software (e.g., drivers, codecs) components associated with providing audio functions to the computing device. Audio functions can include speaker and/or headphone output, as well as microphone input. Devices for such functions can be integrated into device 700, or connected to device 700. In one embodiment, a user interacts with device 700 by providing audio commands that are received and processed by processor 710.

Display subsystem 730 represents hardware (e.g., display devices) and software (e.g., drivers) components that provide a visual and/or tactile display for a user to interact with the computing device. Display subsystem 730 includes display interface 732, which includes the particular screen or hardware device used to provide a display to a user. In one embodiment, display interface 732 includes logic separate from processor 710 to perform at least some processing related to the display. In one embodiment, display subsystem 730 includes a touchscreen device that provides both output and input to a user. In one embodiment, display subsystem 730 includes a high definition (HD) display that provides an output to a user. High definition can refer to a display having a pixel density of approximately 100 PPI (pixels per inch) or greater, and can include formats such as full HD (e.g., 1080p), retina displays, 4K (ultra high definition or UHD), or others.

I/O controller 740 represents hardware devices and software components related to interaction with a user. I/O controller 740 can operate to manage hardware that is part of audio subsystem 720 and/or display subsystem 730. Additionally, I/O controller 740 illustrates a connection point for additional devices that connect to device 700 through which a user might interact with the system. For example, devices that can be attached to device 700 might include microphone devices, speaker or stereo systems, video systems or other display device, keyboard or keypad devices, or other I/O devices for use with specific applications such as card readers or other devices.

As mentioned above, I/O controller 740 can interact with audio subsystem 720 and/or display subsystem 730. For example, input through a microphone or other audio device can provide input or commands for one or more applications or functions of device 700. Additionally, audio output can be provided instead of or in addition to display output. In another example, if display subsystem includes a touchscreen, the display device also acts as an input device, which can be at least partially managed by I/O controller 740. There can also be additional buttons or switches on device 700 to provide I/O functions managed by I/O controller 740.

In one embodiment, I/O controller 740 manages devices such as accelerometers, cameras, light sensors or other environmental sensors, gyroscopes, global positioning system (GPS), or other hardware that can be included in device 700. The input can be part of direct user interaction, as well as providing environmental input to the system to influence its operations (such as filtering for noise, adjusting displays for brightness detection, applying a flash for a camera, or other features). In one embodiment, device 700 includes power management 750 that manages battery power usage, charging of the battery, and features related to power saving operation.

Memory subsystem 760 includes memory device(s) 762 for storing information in device 700. Memory subsystem 760 can include nonvolatile (state does not change if power to the memory device is interrupted) and/or volatile (state is indeterminate if power to the memory device is interrupted) memory devices. Memory 760 can store application data, user data, music, photos, documents, or other data, as well as system data (whether long-term or temporary) related to the execution of the applications and functions of system 700. In one embodiment, memory subsystem 760 includes memory controller 764 (which could also be considered part of the control of system 700, and could potentially be considered part of processor 710). Memory controller 764 includes a scheduler to generate and issue commands to memory device 762.

Connectivity 770 includes hardware devices (e.g., wireless and/or wired connectors and communication hardware) and software components (e.g., drivers, protocol stacks) to enable device 700 to communicate with external devices. The external device could be separate devices, such as other computing devices, wireless access points or base stations, as well as peripherals such as headsets, printers, or other devices.

Connectivity 770 can include multiple different types of connectivity. To generalize, device 700 is illustrated with cellular connectivity 772 and wireless connectivity 774. Cellular connectivity 772 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, LTE (long term evolution - also referred to as "4G"), or other cellular service standards. Wireless connectivity 774 refers to wireless connectivity that is not cellular, and can include personal area networks (such as Bluetooth), local area networks (such as WiFi), and/or wide area networks (such as WiMax), or other wireless communication, such as NFC. Wireless communication refers to transfer of data through the use of modulated electromagnetic radiation through a non-solid medium. Wired communication occurs through a solid communication medium.

Peripheral connections 780 include hardware interfaces and connectors, as well as software components (e.g., drivers, protocol stacks) to make peripheral connections. It will be understood that device 700 could both be a peripheral device ("to" 782) to other computing devices, as well as have peripheral devices ("from" 784) connected to it. Device 700 commonly has a "docking" connector to connect to other computing devices for purposes such as managing (e.g., downloading and/or uploading, changing, synchronizing) content on device 700. Additionally, a docking connector can allow device 700 to connect to certain peripherals that allow device 700 to control content output, for example, to audiovisual or other systems.

In addition to a proprietary docking connector or other proprietary connection hardware, device 700 can make peripheral connections 780 via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other type.

To summarize, some examples of the present disclosure propose to implement an NFC card detect mode that generates a short pulse on a power amplifier, using an internal, low power clock generator circuit at approximatively *m* x 13.56 MHz driving the DAC and generating a pulse during one clock period. On the receiver side, after the pulse is emitted, an ADC may sample the antenna network signal using the same low power/low accuracy clock. The pulse response may therefore be sampled at *m* times the expected ringing frequency. *m* may be 4, for example.

Instead of sending a short magnetic field burst, an NFC reader according to the present disclosure may send a single narrow pulse of current into the antenna network. Since the antenna network is a resonant circuit, the antenna network responds to this pulse with a large ringing at the resonance frequency that decays over time. Depending on whether there is or not an NFC card in the field, the ringing at the reader side will be different in amplitude, length, phase and frequency due to the different impedance seen by the reader antenna. The pulse duration may be optimal at about ¼ of the resonance period but does not required to be accurate. Therefore no accurate clock reference is needed for the card detect mode. By using a detector that can sense the amplitude, length, frequency and phase changes of the ringing signal, one can detect very accurately the presence of a card. Such a detection can be done with a correlation function comparing two successive impulse responses.

Examples of the present disclosure may help to significantly reduce the power consumption in card detect mode by removing the requirement of an accurate clock reference. Examples of the present disclosure may allow for significant power savings. For instance in conventional implementation, the card detect polling itself running once every 300ms may consume on average 66µA in an NFC controller chip but the external time-based reference may consume 50µA on average. Examples of the present disclosure may provide a much better sensitivity when using a correlator that can sense the amplitude, the duration, the phase and the frequency response. In conventional carrier burst methods, only amplitude change was sensed.

The description and drawings merely illustrate the principles of the disclosure. It will thus be appreciated that those skilled in the art will be able to devise various alternative arrangements according to the present disclosure. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (200) for near field communication, NFC, comprising:
means (240) for generating a signal pulse (242) based on a first clock signal, the means (240) for generating comprising at least one of the group of ceramic oscillators, ring oscillators and RC oscillators configured to generate the first clock signal;
means (250) for polling for a presence of an NFC transponder (120) using the signal pulse;
at least one crystal oscillator configured to generate a second clock signal used for generating a carrier signal for communication between the apparatus (200) and the NFC transponder (120),
wherein the means (240) for generating is configured to generate the first clock signal having a different frequency and a lower frequency accuracy than the second clock signal.

2. The apparatus (200) of claim 1, wherein the means (250) for polling is configured to use the signal pulse (242) instead of the carrier signal used for communication between the apparatus and the NFC transponder (120).

3. The apparatus (200) of claim 1 or 2, further comprising
an antenna network (110; 112);
wherein the means (250) for polling is configured to
feed the signal pulse (242) to the antenna network (110; 112),
to receive an antenna response signal responsive to the signal pulse, and
to detect the presence or absence of the NFC transponder (120) based on an antenna response signal detected in response to the signal pulse.

4. The apparatus (200) of claim 3, wherein the means (250) for polling is configured to detect the presence or absence of the NFC transponder (120) based on a comparison between the antenna response signal and a reference signal.

5. The apparatus (200) of claim 4, wherein the reference signal is based on at least one previous impulse response of the apparatus in response to at least one previously generated signal pulse.

6. The apparatus (200) of any one of the previous claims, wherein the means (240) for generating is configured to generate the signal pulse (242) independently of the carrier signal for communication between the apparatus and the NFC transponder (120).

7. The apparatus (200) of any one of the previous claims, wherein the means (240) for generating the signal pulse is configured to generate the signal pulse (242) with a pulse duration in a range from 1/(8**f_{c}*) to 2/*f_{c}*, wherein *f_{c}* denotes the frequency of the carrier signal for communication between the apparatus and the NFC transponder (120).

8. The apparatus (200) of any one of the previous claims, wherein the means (240) for generating the signal pulse is configured to repeatedly generate the signal pulse (242) with a pulse repetition frequency in a range between 0.5 Hz and 20 Hz.

9. The apparatus (200) of any one of the previous claims, wherein the means (240) for generating the signal pulse is configured to generate the signal pulse having a non-sinusoidal pulse shape.

10. The apparatus (200) of any one of the previous claims, wherein the means (240) for generating the signal pulse is configured to generate the signal pulse having a rectangular, raised cosine, sinc, or Gaussian pulse shape.

11. A polling method (500) for an NFC reader device, the method comprising:
generating (510) a signal pulse based on a first clock signal, wherein the first clock signal is generated by at least one of the group of ceramic oscillators, ring oscillators and RC oscillators;
polling (520) for a presence of an NFC transponder (120) using the signal pulse;
generating a second clock signal used for generating a carrier signal for communication between the NFC reader device (200) and the NFC transponder (120), wherein the second clock signal is generated by at least one crystal oscillator,
wherein the first clock signal is generated with a different frequency and a lower frequency accuracy than the second clock signal.

12. The method (500) of claim 11, wherein the signal pulse is used for polling (520) instead of the carrier signal used for communication between the NFC reader device and the NFC transponder (120).

## Patentansprüche

1. Vorrichtung (200) für Nahfeldkommunikation, NFC, umfassend:
Mittel (240) zum Erzeugen eines Signalimpulses (242) basierend auf einem ersten Taktsignal, wobei die Mittel (240) zum Erzeugen mindestens einen aus der Gruppe von Keramikoszillatoren, Ringoszillatoren und RC-Oszillatoren umfassen, die dazu ausgelegt sind, das erste Taktsignal zu erzeugen;
Mittel (250) zum Abfragen auf ein Vorhandensein eines NFC-Transponders (120) unter Verwendung des Signalimpulses;
mindestens einen Kristalloszillator, der dazu ausgelegt ist, ein zweites Taktsignal zu erzeugen, das zum Erzeugen eines Trägersignals für die Kommunikation zwischen der Vorrichtung (200) und dem NFC-Transponder (120) verwendet wird,
wobei die Mittel (240) zum Erzeugen dazu ausgelegt sind, das erste Taktsignal mit einer anderen Frequenz und einer geringeren Frequenzgenauigkeit als das zweite Taktsignal zu erzeugen.

2. Vorrichtung (200) nach Anspruch 1, wobei die Mittel (250) zum Abfragen dazu ausgelegt sind, den Signalimpuls (242) anstelle des für die Kommunikation zwischen der Vorrichtung und dem NFC-Transponder (120) verwendeten Trägersignals zu verwenden.

3. Vorrichtung (200) nach Anspruch 1 oder 2, ferner umfassend
ein Antennennetzwerk (110; 112);
wobei die Mittel (250) zum Abfragen dazu ausgelegt sind den Signalimpuls (242) in das Antennennetzwerk (110; 112) einspeisen,
ein Antennenantwortsignal zu empfangen, das auf den Signalimpuls reagiert, und
das Vorhandensein oder Nichtvorhandensein des NFC-Transponders (120) basierend auf einem als Antwort auf den Signalimpuls detektierten Antennenantwortsignal zu detektieren.

4. Vorrichtung (200) nach Anspruch 3, wobei die Mittel (250) zum Abfragen dazu ausgelegt sind, das Vorhandensein oder Nichtvorhandensein des NFC-Transponders (120) basierend auf einem Vergleich zwischen dem Antennenantwortsignal und einem Referenzsignal zu detektieren.

5. Vorrichtung (200) nach Anspruch 4, wobei das Referenzsignal auf mindestens einer vorherigen Impulsantwort der Vorrichtung als Antwort auf mindestens einen zuvor erzeugten Signalimpuls basiert.

6. Vorrichtung (200) nach einem der vorhergehenden Ansprüche, wobei die Mittel (240) zum Erzeugen dazu ausgelegt sind, den Signalimpuls (242) unabhängig von dem Trägersignal für die Kommunikation zwischen der Vorrichtung und dem NFC-Transponder (120) zu erzeugen.

7. Vorrichtung (200) nach einem der vorhergehenden Ansprüche, wobei die Mittel (240) zum Erzeugen des Signalimpulses dazu ausgelegt sind, den Signalimpuls (242) mit einer Impulsdauer in einem Bereich von 1/(8**f_{c}*) bis *2*/*f_{c}* zu erzeugen, wobei *f_{c}* die Frequenz des Trägersignals für die Kommunikation zwischen der Vorrichtung und dem NFC-Transponder (120) bezeichnet.

8. Vorrichtung (200) nach einem der vorhergehenden Ansprüche, wobei die Mittel (240) zum Erzeugen des Signalimpulses dazu ausgelegt sind, den Signalimpuls (242) wiederholt mit einer Impulswiederholfrequenz in einem Bereich zwischen 0,5 Hz und 20 Hz zu erzeugen.

9. Vorrichtung (200) nach einem der vorhergehenden Ansprüche, wobei die Mittel (240) zum Erzeugen des Signalimpulses dazu ausgelegt sind, den Signalimpuls mit einer nicht-sinusförmigen Impulsform zu erzeugen.

10. Vorrichtung (200) nach einem der vorhergehenden Ansprüche, wobei die Mittel (240) zum Erzeugen des Signalimpulses dazu ausgelegt sind, den Signalimpuls mit einer rechteckigen, erhöhten Kosinus-, Sinus- oder Gaußschen Impulsform zu erzeugen.

11. Abfrageverfahren (500) für eine NFC-Lesevorrichtung, wobei das Verfahren umfasst:
Erzeugen (510) eines Signalimpulses basierend auf einem ersten Taktsignal, wobei das erste Taktsignal von mindestens einem aus der Gruppe der Keramikoszillatoren, Ringoszillatoren und RC-Oszillatoren erzeugt wird;
Abfragen (520) auf ein Vorhandensein eines NFC-Transponders (120) unter Verwendung des Signalimpulses;
Erzeugen eines zweiten Taktsignals, das zum Erzeugen eines Trägersignals für die Kommunikation zwischen der NFC-Lesevorrichtung (200) und dem NFC-Transponder (120) verwendet wird, wobei das zweite Taktsignal durch mindestens einen Kristalloszillator erzeugt wird,
wobei das erste Taktsignal mit einer anderen Frequenz und einer geringeren Frequenzgenauigkeit erzeugt wird als das zweite Taktsignal.

12. Verfahren (500) nach Anspruch 11, wobei der Signalimpuls zum Abfragen (520) anstelle des für die Kommunikation zwischen der NFC-Lesevorrichtung und dem NFC-Transponder (120) verwendeten Trägersignals verwendet wird.

## Revendications

1. Appareil (200) pour une communication en champ proche, NFC, comprenant :
un moyen (240) pour générer une impulsion de signal (242) sur la base d'un premier signal d'horloge, le moyen (240) de génération comprenant au moins un élément du groupe des oscillateurs céramiques, des oscillateurs en anneau et des oscillateurs RC configurés pour générer le premier signal d'horloge;
un moyen (250) d'interrogation pour sonder la présence d'un transpondeur NFC (120) en utilisant l'impulsion de signal;
au moins un oscillateur à cristal configuré pour générer un second signal d'horloge utilisé pour générer un signal porteur pour la communication entre l'appareil (200) et le transpondeur NFC (120),
dans lequel le moyen (240) de génération est configuré pour générer le premier signal d'horloge ayant une fréquence différente et une précision de fréquence inférieure à celle du second signal d'horloge.

2. Appareil (200) selon la revendication 1, dans lequel le moyen (250) d'interrogation est configuré pour utiliser l'impulsion de signal (242) à la place du signal porteur utilisé pour la communication entre l'appareil et le transpondeur NFC (120).

3. Appareil (200) selon la revendication 1 ou 2, comprenant en outre :
un réseau d'antennes (110; 112) ;
dans lequel le moyen (250) d'interrogation est configuré pour :
fournir l'impulsion de signal (242) au réseau d'antennes (110; 112),
recevoir un signal de réponse d'antenne en réponse à l'impulsion de signal, et
détecter la présence ou l'absence du transpondeur NFC (120) sur la base d'un signal de réponse d'antenne détecté en réponse à l'impulsion de signal.

4. Appareil (200) selon la revendication 3, dans lequel le moyen (250) d'interrogation est configuré pour détecter la présence ou l'absence du transpondeur NFC (120) sur la base d'une comparaison entre le signal de réponse d'antenne et un signal de référence.

5. Appareil (200) selon la revendication 4, dans lequel le signal de référence est basé sur au moins une réponse impulsionnelle précédente de l'appareil en réponse à au moins une impulsion de signal générée précédemment.

6. Appareil (200) selon l'une quelconque des revendications précédentes, dans lequel le moyen (240) de génération est configuré pour générer l'impulsion de signal (242) indépendamment du signal porteur pour la communication entre l'appareil et le transpondeur NFC (120) .

7. Appareil (200) selon l'une quelconque des revendications précédentes, dans lequel le moyen (240) pour générer l'impulsion de signal est configuré pour générer l'impulsion de signal (242) avec une durée d'impulsion dans une plage allant de 1/(8**f_{c}*) à 2/*f*_{c}, où *f*_{c} désigne la fréquence du signal porteur pour la communication entre l'appareil et le transpondeur NFC (120) .

8. Appareil (200) selon l'une quelconque des revendications précédentes, dans lequel le moyen (240) pour générer l'impulsion de signal est configuré pour générer de manière répétée l'impulsion de signal (242) avec une fréquence de répétition d'impulsion dans une plage comprise entre 0,5 Hz et 20 Hz.

9. Appareil (200) selon l'une quelconque des revendications précédentes, dans lequel le moyen (240) pour générer l'impulsion de signal est configuré pour générer l'impulsion de signal ayant une forme d'impulsion non sinusoïdale.

10. Appareil (200) selon l'une quelconque des revendications précédentes, dans lequel le moyen (240) pour générer l'impulsion de signal est configuré pour générer l'impulsion de signal ayant une forme d'impulsion rectangulaire, de cosinus surélevé, de sinus cardinal, ou gaussienne.

11. Procédé d'interrogation (500) pour un dispositif de lecture NFC, le procédé comprenant de :
générer (510) une impulsion de signal sur la base d'un premier signal d'horloge, dans lequel le premier signal d'horloge est généré par au moins l'un du groupe des oscillateurs céramiques, des oscillateurs en anneau et des oscillateurs RC;
effectuer une interrogation (520) pour sonder la présence d'un transpondeur NFC (120) en utilisant l'impulsion de signal;
générer un second signal d'horloge utilisé pour générer un signal porteur pour la communication entre le dispositif de lecture NFC (200) et le transpondeur NFC (120), dans lequel le second signal d'horloge est généré par au moins un oscillateur à cristal,
dans lequel le premier signal d'horloge est généré avec une fréquence différente et une précision de fréquence inférieure à celle du second signal d'horloge.

12. Procédé (500) selon la revendication 11, dans lequel l'impulsion de signal est utilisée pour l'interrogation (520) au lieu du signal porteur utilisé pour la communication entre le dispositif de lecture NFC et le transpondeur NFC (120).
